# EUROPEAN PATENT SPECIFICATION

(11) **EP 2 363 816 B1**
(45) Date of publication and mention of the grant of the patent: **19.06.2019**
(21) Application number: 11153571.2
(22) Date of filing: 07.02.2011
(51) Int. Cl.: G06F 17/30

(54) **Destination search in a navigation system using a spatial index structure**
Zielsuche in einem Navigationssystem mit einer räumlichen Indexstruktur
Recherche de destination dans un système de navigation utilisant une structure d'indice spatial

(30) Priority: 31.01.2011 US 201113017296; 08.02.2010 US 302317 P
(43) Date of publication of application: 07.09.2011
(73) Proprietor: HERE Global B.V., 5611 ZT Eindhoven (NL)
(72) Inventor: Pfeifle, Martin, 72297, Seewald (DE); Richter, Jan, 65510, Idstein (DE)
(74) Representative: Potter Clarkson

(56) References cited:
- RAMASWAMY HARIHARAN ET AL: "Processing Spatial-Keyword (SK) Queries in Geographic Information Retrieval (GIR) Systems", SCIENTIFIC AND STATISTICAL DATABASE MANAGEMENT, 2007. SSBDM '07. 19TH INTERNATIONAL CONFERENCE ON, IEEE, PI, 1 July 2007 (2007-07-01), pages 16-16, XP031117944, ISBN: 978-0-7695-2868-7
- GUETING R H: "An Introduction to Spatial Database Systems", VLDB JOURNAL, SPRINGER VERLAG, BERLIN, DE, vol. 3, no. 4, 1 October 1994 (1994-10-01) , pages 357-399, XP002235800, ISSN: 1066-8888, DOI: DOI:10.1007/BF01231602

## Description

### FIELD

The present invention relates generally to full text search, and more particularly, relates to using a spatial index structure in a full text search system.

### BACKGROUND

Full text search (FTS) systems search for relevant documents based on key words entered by a system user. The user enters a set of terms, referred to as tokens, and the FTS system finds documents containing all of the terms in the set. In order to support queries efficiently, the FTS system typically uses inverted indexes. For example, Lucene (described at http://lucene.apache.org/) and SQLite's FTS module (described at http://www.sqlite.org/cvstrac/wiki?p=FtsUsage) are both FTS systems that use inverted indexes.

An inverted index assigns a set of document identifiers to each token. The document identifiers are associated with documents that include the token at least once. Upon receiving a search request, the FTS system selects the set of document identifiers for each token in the request and then compares the document sets to each other. If a document identifier is contained in all document sets, the FTS system provides the document identifier in a result set of all identifiers contained in all document sets.

From a logical point of view, the inverted index can be regarded as a relation Invertedlndex(Token, DocID) with an combined index on Token and Docld. The inverted index allows the FTS system to efficiently execute queries such as Query 1:

```
     SELECT DocID FROM Invertedlndex WHERE Token= 'Neuschwanstein'
```

If only a small number of documents belong to the result set, the FTS system's performance is generally good. If a user searches for documents that contain two terms 'Bavaria' and 'Neuschwanstein,' the FTS system executes a query such as Query 2:

```
SELECT DocID FROM Invertedlndex WHERE Token ='Bavaria'
     INTERSECT
     SELECT DocID FROM Invertedlndex WHERE Token='Neuschwanstein'
```

Assume a database has one million documents containing the term 'Bavaria' and ten documents containing the term 'Neuschwanstein.' Although the size of the result set for Query 2 is equal to the size of the result set for Query 1, Query 2 takes much longer as the FTS system has to iterate over one entire million document identifiers belonging to the term 'Bavaria.'

While the inverted index works well in some applications, there is still room for improvement. For example, when the choice of search terms is limited, other full search text system designs may consume less secondary storage and provide faster query response times.

Ramaswamy Hariharan et al., Scientific and Statistical Database Management, 2007, 19th International Conference on, IEEE, PI, 1 July 2007, pages 16 - 16, discloses processing spatial-keyword queries in geographical information retrieval systems.

### SUMMARY

Various aspects of the invention are set out in the claims.

A method and system for performing a full text search that saves secondary storage and increases full text search query speed is described. The full text search system uses a spatial index instead of an inverted index. The spatial index may be an R-tree, X-tree, IQ-tree, Quadtree, and so on. The method models documents as low-dimensional vectors and stores them in the spatial index.

The documents are clustered as a combination of all terms, which improves query times. Furthermore, a document identifier is stored only once, reducing the overall consumed secondary storage in this system. The full text search system with a spatial index is especially useful for structured low-dimensional documents, such as those used during destination search.

These as well as other aspects and advantages will become apparent to those of ordinary skill in the art by reading the following detailed description, with reference where appropriate to the accompanying drawings. Further, it is understood that this summary is merely an example and is not intended to limit the scope of the invention as claimed.

### BRIEF DESCRIPTION OF THE DRAWINGS

Presently preferred embodiments are described below in conjunction with the appended drawing figures, wherein like reference numerals refer to like elements in the various figures, and wherein:
Figure 1 is a block diagram depicting a navigation system, according to an example;
Figure 2 shows a map of a geographic region, according to an example;
Figure 3 is a block diagram of a geographic database that represents the geographic region of Figure 2, according to an example;
Figure 4 is a block diagram of a full text search system, according to an example; and
Figure 5 is a flow diagram of a method of performing a full text search using the full text search system depicted in Figure 4, according to an example.

### DETAILED DESCRIPTION

### I. Navigation System

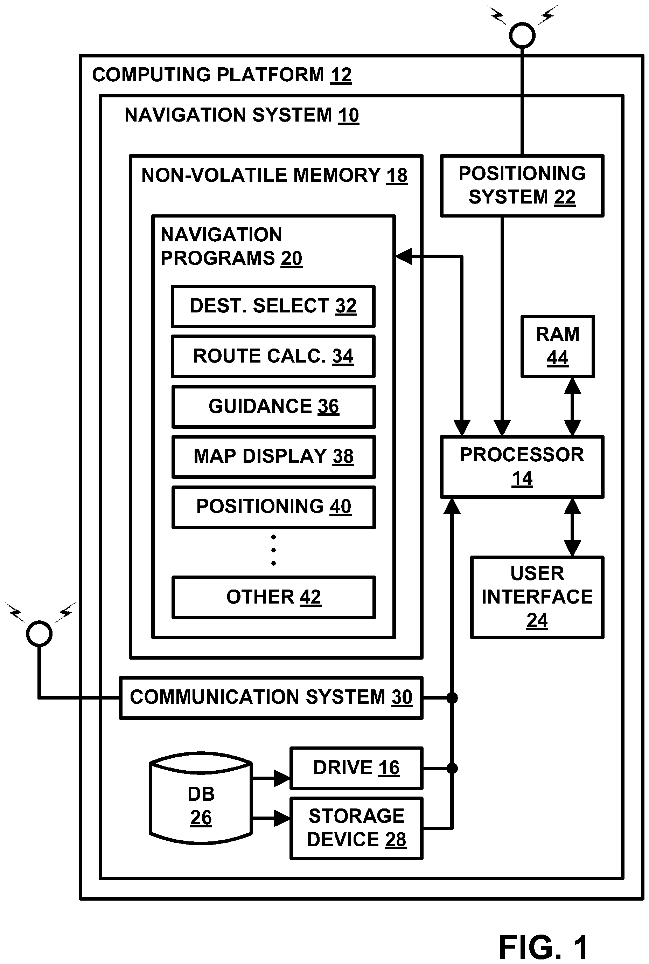

Figure 1 is a block diagram of a navigation system 10 associated with a computing platform 12. The computing platform 12 may be associated with a vehicle. Additionally, the computing platform 12 may be a personal digital assistant (PDA), mobile telephone, personal computer, or any other computer. The navigation system 10 is a combination of hardware and software components. In one embodiment, the navigation system 10 includes a processor 14, a drive 16 connected to the processor 14, and a non-volatile memory storage device 18 for storing navigation application software programs 20 and possibly other information.

The navigation system 10 also includes a positioning system 22. The positioning system 22 may utilize GPS-type technology, a dead reckoning-type system, or combinations of these or other systems, all of which are known in the art. The positioning system 22 may include suitable sensing devices that measure the traveling distance speed, direction, orientation, and so on. The positioning system 22 may also include a GPS system. The positioning system 22 outputs a signal to the processor 14. The navigation application software programs 20 that run on the processor 14 use the signal from the positioning system 22 to determine the location, direction, orientation, etc., of the computing platform 12.

The navigation system 10 also includes a user interface 24 that allows the end user to input information into the navigation system 10 and obtain information from the navigation system 10. The input information may include a request for navigation features and functions of the navigation system 10. To provide navigation features and functions, the navigation system 10 uses a geographic database 26.

In one embodiment, the geographic database 26 is stored on a storage medium, such as a CD-ROM or DVD, that is installed in the drive 16 so that the geographic database 26 can be read and used by the navigation system 10. In one embodiment, the navigation system 10 also includes a storage device 28, such as a hard disk or memory card, on which a portion of the geographic database 26 is stored. In another embodiment, the geographic database 26 is stored on a hard disk. In one embodiment, the geographic database 26 may be a geographic database published by NAVTEQ North America, LLC of Chicago, Illinois. The geographic database 26 does not have to be physically provided at the location of the navigation system 10. In alternative embodiments, some or the entire geographic database 26 may be located remotely from the rest of the navigation system 10 and portions of the geographic data provided via a communications system 30, as needed.

In one exemplary type of system, the navigation application software programs 20 load from the non-volatile memory storage device 18 into a random access memory (RAM) 44 associated with the processor 14. The processor 14 also receives input from the user interface 24. The navigation system 10 uses the geographic database 26 stored on the storage medium and/or storage device 28, possibly in conjunction with the outputs from the positioning system 22 and the communications system 30, to provide various navigation features and functions. The navigation application software programs 20 may include separate applications (or subprograms) that provide the various navigation-related features and functions. The navigation functions and features may include destination selection 32 (identifying one or more places to be used as a destination based on user input), route calculation 34 (determining a route from an origin to a destination), route guidance 36 (providing detailed directions for reaching a destination), map display 38, and positioning 40 (e.g., map matching). Other functions and programming 42 may be included in the navigation system 10.

The navigation application software programs 20 may be written in a suitable computer programming language such as C, although other programming languages, such as C++ or Java, are also suitable. All of the components described above may be conventional (or other than conventional) and the manufacture and use of these components are known to those of skill in the art.

### II. Geographic Database

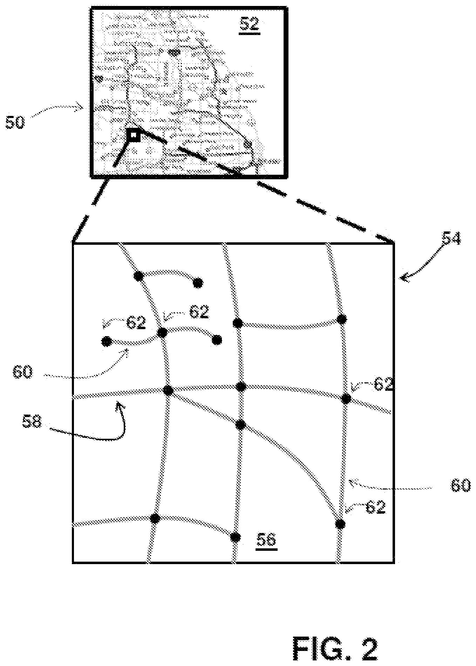

Figure 2 shows a map 50 of a geographic region 52. The geographic region 52 may correspond to a metropolitan or rural area, a state, a country, or combinations thereof, or any other area of comparable size. Located in the geographic region 52 are physical geographic features, such as roads, points of interest (including businesses, facilities, etc.), lakes, rivers, railroads, municipalities, etc.

Figure 2 also includes an enlarged map 54 of a portion 56 of the geographic region 52. The enlarged map 54 illustrates part of the road network 58 in the geographic region 52. The road network 58 includes, among other things, roads and intersections located in the geographic region 52. As shown in the portion 56, each road in the geographic region 52 is composed of one or more road segments 60. A road segment 60 represents a portion of the road. Each road segment 60 is shown to have associated with it two nodes 62; one node represents the point at one end of the road segment and the other node represents the point at the other end of the road segment. The node at either end of a road segment may correspond to a location at which the road meets another road, i.e., an intersection, or where the road dead-ends.

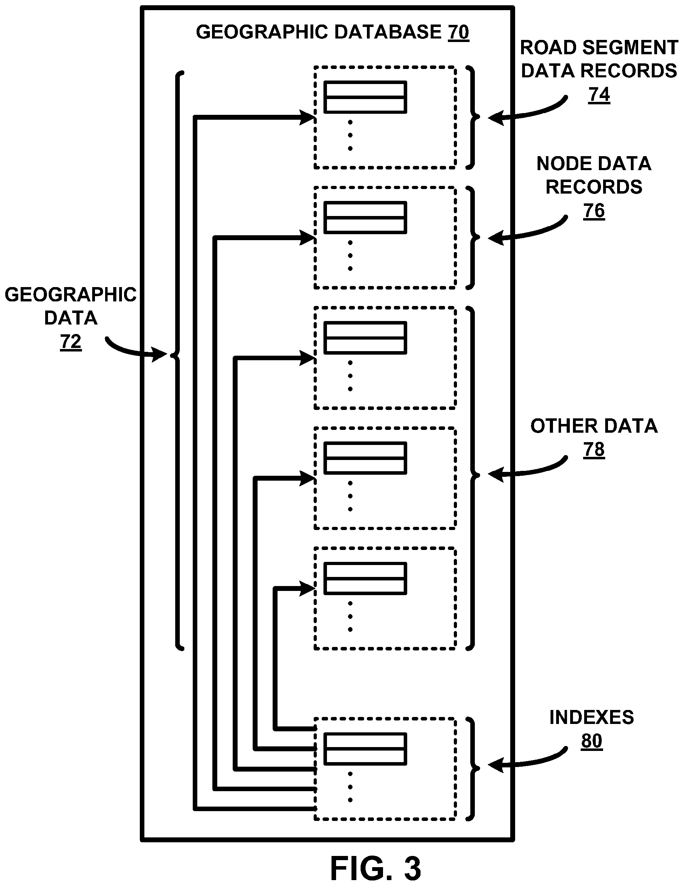

Referring to Figure 3, a geographic database 70 contains data 72 that represents some of the physical geographic features in the geographic region (52 in Figure 2). The data 72 contained in the geographic database 70 includes data that represent the road network 58. In the embodiment of Figure 3, the geographic database 70 that represents the geographic region 52 contains at least one database record 74 (also referred to as "entity" or "entry") for each road segment 60 in the geographic region 52 in Figure 2. The road segment data record 74 may include a segment ID by which the data record can be identified in the geographic database 70.

Each road segment data record 74 has associated with it information (such as "attributes", "fields", etc.) that describes features of the represented road segment. The road segment data record 74 may include data that indicate the restrictions, if any, on the direction of vehicular travel permitted on the represented road segment, data indicating a speed limit or speed category (i.e., the maximum permitted vehicular speed of travel) on the represented road segment, data indicating whether the represented road segment is part of a controlled access road (such as an expressway), a ramp to a controlled access road, a bridge, a tunnel, a toll road, a ferry, and so on.

The road segment data record 74 also includes data providing the geographic coordinates (e.g., the latitude and longitude) of the endpoints of the represented road segment and data providing the shape of the road segment. In one embodiment, the endpoint data are references to the node data records 76 that represent the nodes corresponding to the endpoints of the represented road segment.

The road segment data record 74 may also include or be associated with other data that refer to various other attributes of the represented road segment. The various attributes associated with a road segment may be included in a single road segment record, or may be included in more than one type of record that are cross-referenced to each other. For example, the road segment data record 74 may include data identifying what turn restrictions exist at each of the nodes that correspond to intersections at the ends of the road portion represented by the road segment, the name or names by which the represented road segment is known, the street address ranges along the represented road segment, and so on.

The geographic database 70 that represents the geographic region 52 also includes a database record 76 (or "entity" or "entry") for each node 62 in the geographic region 52. (The terms "nodes" and "segments" represent only one terminology for describing these physical geographic features and other terminology for describing these features is intended to be encompassed within the scope of these concepts). Each of the node data records 76 may have associated information (such as "attributes", "fields", etc.) that allows identification of the road segment(s) that connect to it and/or its geographic position (e.g., its latitude and longitude coordinates).

The geographic database 70 may also include other kinds of data 78. The other kinds of data 78 may represent other kinds of geographic features or anything else. The other kinds of data may include point of interest data. For example, the point of interest data may include point of interest records comprising a type (e.g., the type of point of interest, such as restaurant, hotel, city hall, police station, historical marker, ATM, golf course, etc.), location of the point of interest, a phone number, hours of operation, etc. Each point of interest has a unique physical location and each of the locations can be identified by its two dimensional (or three dimensional) geographic coordinates, (i.e., latitude, longitude, and optionally altitude). Additionally, the locations may correspond to one of the nodes or may correspond to a point along a road segment.

The geographic database 70 also includes indexes 80. The indexes 80 may include various types of indexes that relate the different types of data to each other or that relate to other aspects of the data contained in the geographic database 70.

### III. Full Text Search System

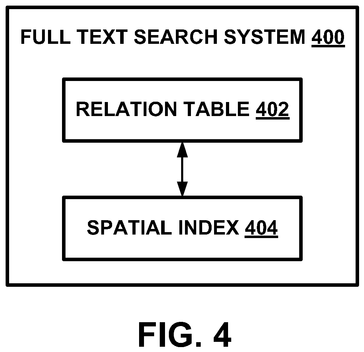

Figure 4 is a block diagram of a full text search (FTS) system 400. The FTS system 400 includes a relation table 402 and a spatial index 404. The relation table 402 maps tokens to token identifiers. Preferably, the token identifier is an integer value. However, the token identifier may be any combination of numbers, letters, and/or symbols.

The spatial index 404 indexes multi-dimensional information. The spatial index 404 may be an R-tree, X-tree, IQ-tree, Quadtree, or other spatial index structure. If the number of dimensions is small (e.g., less than six), the R-tree is the preferred index structure. If the number of dimensions is large (e.g., more than six), other index structures may be preferable, such as the X-tree or IQ-tree.

The FTS system 400 may be used in the navigation system 10 as part of destination selection. In this example, some or all of the FTS system 400 may be included as part of the destination selection program 32. The documents may be streets, intersections, POIs, and other potential destinations stored in the geographic database 26.

While the following description uses SQLite (www.sqlite.org) and its full text search extension FTS3 (http://www.sqlite.org/cvstrac/wiki?p=FtsUsage), it is understood that other search engines may be used. In FTS3, each FTS index is modeled as a virtual table. The virtual table VT(id,att1,..,attn) contains a document identifier "id" and attributes "att1,.., attn." FTS3 allows a user to retrieve documents where query tokens occur in any of the attributes or in specific attributes. For example, a document may have one of the following formats.
- VT_Streets(StreetID, Country, City, Street).
- VT_Intersections(IntersectionID, State, City, Streetl, Street2)
- VT_POIs(POIID, Name, Country, Street, Category)

The following example uses VT_Intersections(IntersectionID, State, City, Streetl, Street2) to show the difference between a full text search system using an inverted index and the FTS system 400. The VT_Intersections table may be populated as follows.

**VT_Intersections**

| IntersectionID | State | City | Street1 | Street2 |
|---|---|---|---|---|
| 4711 | California | Los Angeles | Jefferson | Madison |
| 4712 | California | Los Angeles | Jefferson | Washington |
| 6000 | California | San Diego | Sanchez | Alfredo |
| 999883 | Florida | Miami | Jefferson | Washington |
| 999884 | Florida | Miami | Franklin | Frankfurt |

Using the VT_Intersections table, a full text search system using an inverted index may issue queries similar to Query 1 and Query 2 as follows. 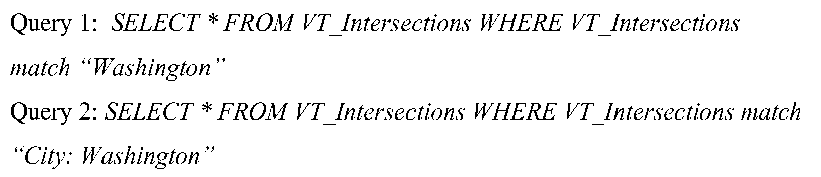 In response to Query 1, the FTS system 400 retrieves all documents that include the token "Washington." In response to Query 2, the FTS system 400 retrieves only the documents that include the token "Washington" in the City column. As a result, documents associated with the intersection identifiers 4712 and 999883 belong to the first result set, but not to the second result set.

For the FTS system 400, each token in the VT_Intersections table is mapped to a token identifier in the relation table 402. An example relation table 402, Token2ID, is provided as follows.

**Token2ID**

| Token | Token ID |
|---|---|
| Alfredo | 1 |
| California | 2 |
| Florida | 3 |
| Frankfurt | 4 |
| Franklin | 5 |
| Jefferson | 6 |
| Los Angeles | 7 |
| Madison | 8 |
| Miami | 9 |
| Sanchez | 10 |
| San Diego | 11 |
| Washington | 12 |
| ... | |

In this example, the token identifier is an integer value; however, other formats may be used. The tokens are preferably listed alphabetically in the relation table 402 as depicted above in the Token2ID table. However, an alphabetical token order is not required.

Additionally, the FTS system 400 stores documents associated with the VT_Intersections table in the spatial index 404. The documents are modeled as low-dimensional vectors prior to storage in the spatial index 404. An example spatial index 404 for the VT_Intersections table is provided as follows. In this RTree_Intersections example, the spatial index 404 is a four-dimensional R-tree where each entry consists of a document identifier, i.e., IntersectionID, and four spatial dimensions, i.e., StateID, CityID, Street1ID and Street2ID.

**RTree_Intersections**

| IntersectionID | StateID | CityID | Street1ID | Street2ID |
|---|---|---|---|---|
| 4711 | 2 | 7 | 6 | 8 |
| 4712 | 2 | 7 | 6 | 12 |
| 6000 | 2 | 11 | 10 | 1 |
| 999883 | 3 | 9 | 6 | 12 |
| 999884 | 3 | 9 | 5 | 4 |

If a user enters "California" as a state name and "Jefferson" as a street name into the user interface 24 of the navigation system 10, the FTS system 400 uses the Token2ID table to obtain the token identifiers for California and Jefferson, which are 2 and 6, respectively. The FTS system 400 then issues the following a spatial query.

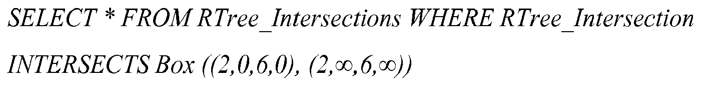

Then, the FTS system 400 retrieves all document identifiers associated with the documents inside the boxed area of the spatial index 404 specified in the query. In this example, the FTS system 400 provides the result set of 4711 and 4712.

While the previous example used an intersection search, the FTS system 400 may be used for other types of searches, such as street and POI searches. For street searches, the spatial index 404 includes a three-dimensional R-tree: Rtree_Streets (StreetID, Country, City, Street). For example, if a user enters "Deutschland" as a country name and "Volger" as a street name into the user interface 24, the FTS system 400 may execute the following box-query.

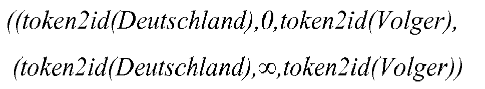

For POIs, the FTS system 400 includes a four-dimensional R-tree: Rtree_POIs (POIID, Name, Country, Street, Category). For example, if a user enters the country and POI name, the FTS system 400 may execute the following box-query.

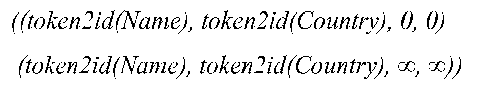

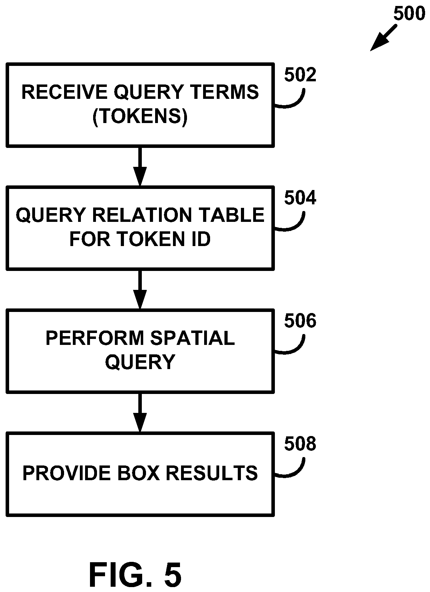

Figure 5 is a flow diagram of a method 500 for performing a full text search using the FTS system 400. At block 502, the FTS system 400 receives query terms from a user. For example, the user may be a user of the navigation system 10 and the query terms are words used to find a destination (e.g., street name, point of interest name). The user may enter the query terms via the user interface 24. For the remainder of the method 500 description, these query terms are referred to as tokens.

At block 504, the FTS system 400 queries the relation table 402 to obtain the token identifiers associated with each of the tokens entered by the user. In the destination selection example, the tokens are country names, city names, street names, point of interest names, and other terms used to locate a destination. The relation table 402 maps the tokens (e.g., Germany, Munich, Berlin, Hauptstrasse, and Leopoldstrasse) to a token identifier.

At block 506, the FTS system 400 performs a spatial query of the spatial index 404 using the token identifiers obtained at block 504. In the destination selection example, each level of the destination is mapped to its own dimension, e.g., Country to X, City to Y, and Street to Z. Each document is then mapped to an n-dimensional vector using the token identifiers. In the navigation system 10 example, the document is an entry in the geographic database 26.

For example, the document (Germany, Munich, Leopoldstrasse) may be mapped to a 3-dimensional vector (token2id(Germany), token2id(Munich), token2id(Leopoldstrasse)), which is stored in the spatial index 404. If a user enters a StreetToken and a CityToken in the user interface 24, the FTS system 400 retrieves responsive documents by executing the following three-dimensional spatial window query.

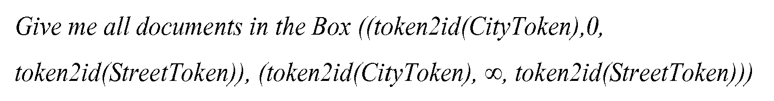

At block 508, the FTS system 400 provides the result set of document identifiers associated with responsive documents located in the boxed area of the spatial index 404 as defined by the query. The FTS system 400 may provide the result set to another system, which then retrieves the documents and provides the documents to the user. Alternatively, the FTS system 400 may retrieve the documents associated with the document identifier and then provide the documents to the user.

### IV. Alternative Embodiments

### a. Mapping Function

In one embodiment, the FTS system 400 does not include the relation table 402. In one example, the FTS system 400 algorithmically maps the tokens to token identifiers using a mapping function. The FTS system 400 stores the documents as multi-dimensional vectors in the spatial index 404 as previously described. The FTS system 400 uses the token identifiers generated by the mapping function as query tokens when performing the spatial query.

For example, an algorithmically mapping of a token (i.e., strings) to a token identifier (e.g., integer) may be performed by taking the first eight bytes of a string and interpreting this byte array as an eight byte integer value. If the string consists of less than eight bytes, the string may be appended with zero bytes.

### b. Spatial Extensions

Additional dimensions may be added to the spatial index 404. For example, dimensions, such as latitude and longitude, may be added to the previously described RTree_Intersections table. The resulting six-dimensional RTree_Intersections table is provided as follows.

**Six-Dimensional RTree_Intersections**

| IntersectionID | StateID | CityID | Street1ID | Street2ID | Latitude | Longitude |
|---|---|---|---|---|---|---|
| 4711 | 2 | 7 | 6 | 8 | 12343453 | 3453453 |
| 4712 | 2 | 7 | 6 | 12 | 12334243 | 6857567 |
| 6000 | 2 | 11 | 10 | 1 | 54645644 | 4563455 |
| 999883 | 3 | 9 | 6 | 12 | 34636363 | 3463463 |
| 999884 | 3 | 9 | 5 | 4 | 35342432 | 3424234 |

### c. One Shot Destinations

If a user enters all tokens in one shot, such as "California Jefferson," the FTS system 400 retrieves the two token identifiers 2 and 6 as described previously. But because the FTS system 400 does not know the token dimensions (e.g., whether California is a street, a city, or a state), the FTS system 400 executes several spatial queries by permuting the dimensions of the query box.

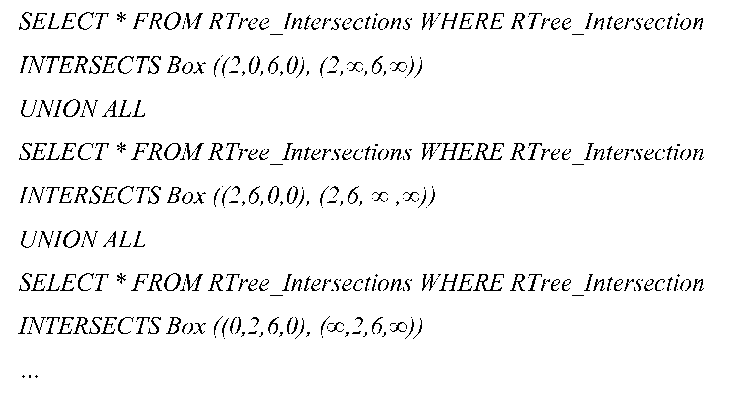

Although in the above example the FTS system 400 executes twelve sub-queries, the overall performance of the FTS system 400 is still expected to be better than inverted index approach.

Alternatively, the FTS system 400 may store the documents redundantly by permuting the dimensions of each document and executing a single query. To reduce the secondary storage requirements, it may be beneficial to permute the query objects rather than the database objects. By adding an additional column to the relation table 402 that indicates in which R-tree dimension the token is used, the number of query permutations is reduced. The following Token2ID table provides an example of adding a dimension column.

**Token2ID with Dimension**

| Token | Dimension | ID |
|---|---|---|
| Miami | 2 | 9 |
| Miami | 3 | 34532 |
| Miami | 4 | 34532 |
| State | 3 | 6456 |
| State | 4 | 6457 |

The token "Miami" may be part of a City name, a Streetl name, or a Street2 name. The token "State" may be part of a Streetl name or a Street2 name. If a user enters the token "State" into the user interface 24, the FTS system 400 executes only two sub-queries as follows.

```
         SELECT * FROM RTree_Intersections WHERE RTree_Intersection
        INTERSECTS Box ((0, 0, 6456, 0), (∞, ∞, 6456, ∞))
         UNION ALL
         SELECT * FROM RTree_Intersections WHERE RTree_Intersection
        INTERSECTS Box ((0, 0, 0, 6457), (∞, ∞, ∞, 6457))
```

Thus, the overall number of query permutations is reduced.

### d. Name Rotations, Exonyms, and Diacritic Character Replacement

Name rotations, exonyms, and diacritic character replacement may also be managed via the FTS system 400. Name rotations occur when a multi-part name is entered into a search engine out of order. For example, a user searching for documents associated with "Los Angeles" may enter "Angeles" instead. To find responsive documents when a user enters "Angeles" instead of "Los Angeles," a record is added to the Token2ID table. As seen in the Token2ID table below, "Angeles; Los" is associated with the same token identifier as "Los Angeles."

**Token2ID**

| Token | Token ID |
|---|---|
| Alfredo | 1 |
| Angeles; Los | 7 (new entry) |
| California | 2 |
| Florida | 3 |
| Frankfurt | 4 |
| Franklin | 5 |
| Jefferson | 6 |
| Los Angeles | 7 |
| Madison | 8 |
| Miami | 9 |
| Sanchez | 10 |
| San Diego | 11 |
| Washington | 12 |
| ... | |

If a user enters "Angeles," the FTS system 400 executes a query such as *SELECT id FROM Token2ID WHERE Token LIKE 'Angeles%',* which returns the same token, i.e. 7, as the query with the token Los Angeles.

An exonym is place name used by foreigners instead of the native-language version used by its inhabitants, such as Moscow in English for the city called Moskva in Russian. A diacritic is an ancillary glyph added to a letter, sometimes referred to as an accent. Diacritic character replacement includes substituting the diacritic with another letter; for example, München becomes Muenchen.

Similar to name rotation, exonyms (Deutschland, Germany, Allemagne) and diacritic character replacements (München, Munchen, Muenchen) may be added to the relation table 402. Alternatively, if the relation table 402 has the structure IDToken(ID, Tokens), the relation table 402 may be populated as follows.

**IDTokens**

| Token ID | Tokens |
|---|---|
| 1 | Germany Deutschland Duitsland Allemagne |
| 2 | Munchen Munchen Muenchen |
| 3 | Otto-Volger-Strasse |
| ... | |

If a user enters a token, the FTS system 400 may execute an FTS query based on the entered token to obtain the token identifiers. In this example, the FTS system 400 uses a traditional FTS system to retrieve the token identifiers. Note that this FTS system typically maintains only thousands of terms, while the FTS system 400 may maintain millions of documents. With the FTS system 400, the complexity is in the combination of the tokens stored in the spatial index 404, rather than in the tokens themselves. As a result, the FTS system manages the combination complexity in a manner that the traditional FTS system with inverted index cannot.

For example, the FTS system 400 may execute the following query.

```
         SELECT ID FROM IDTokens WHERE TokenID match 'Token'
```

In this example, the FTS system 400 obtains token identifier "1" regardless of whether the user enters Germany, Deutschland, Duitsland, or Allemagne. Similarly, the FTS system 400 obtains token identifier "2" regardless of whether the user enters Munchen, Munchen, or Muenchen. Additionally, the FTS system 400 obtains token identifier "3" regardless of whether the user enters Volger, Otto, Otto-Volger, or Otto-Volger-Strasse.

Note that this approach may be combined with the approach in Section c "One Shot Destination." In this example, the IDTokens table may be formatted as follows.

**IDTokens**

| ID | Dimension | Tokens |
|---|---|---|
| 1 | 1 | Germany Deutschland Duitsland Allemagne |
| 2 | 2 | München Munchen Muenchen |
| 2 | 3 | München Munchen Muenchen |
| 3 | 3 | Otto-Volger-Strasse |
| ... | | |

In the example above, Munchen is used as both a City name and as a Street name.

### V. Conclusions

The FTS system 400 and the method 500 save secondary storage and increase query processing speed. As a result, the FTS system 400 and the method 500 are especially beneficial during destination selection with a navigation system. However, it is understood that the FTS system 400 and the method 500 may be used in navigation systems for other full text search applications and in other systems that perform full text searches.

## Claims

1. A computer-implemented method (500) for performing full text search for documents, wherein a document is an entry in a geographic database (26) in a navigation system (10) associated with a computer platform (12) and the navigation system being a combination of hardware and software components and wherein the documents are associated with document identifiers, the method comprising:
receiving (502) search terms from a user wherein the search terms are words used to find a destination;
querying (504) a relation table (402) that associates the received search terms to search term identifiers to obtain the search term identifiers associated with the received search terms, wherein the search term identifiers are integer values;
mapping the search term identifiers for each level of the destination to their own dimensions;
performing (506) a spatial query of a spatial index (404) using the search term identifiers mapped to their own dimensions to identify documents located in a boxed area of the spatial index (404) as defined by the spatial query, and wherein the spatial index stores multi-dimensional vectors to which each document is mapped prior to storage in the spatial index, and wherein the multi-dimensional vectors include the search term identifiers and wherein the multi-dimensional vectors have a format of one of:
(StreetID, Country, City, Street); or
(IntersectionID, State, City, Streetl, Street2); or
(POIID, Name, Country, Street, Category),
providing (508) a result set of document identifiers associated with the identified documents.

2. The method (500) of claim 1, wherein the relation table orders the search terms alphabetically.

3. The method (500) of claim 1, wherein the spatial index is one of an R-tree, X-tree, IQ-tree, and a Quadtree.

4. The method (500) of claim 1, wherein the relation table includes a dimension column that includes data that indicates a search term dimension.

5. The method (500) of claim 1, wherein the relation table includes name rotations or exonyms or diacritic character replacements.

6. The method (500) of claim 1, wherein the spatial index includes additional dimensions describing a spatial location of a destination represented by a vector.

7. A full text search system (400) for documents, wherein a document is an entry in a geographic database (26) in a navigation system (10) associated with a computer platform (12) and the navigation system being a combination of hardware and software components and wherein the documents are associated with document identifiers, the system comprising:
a relation table (402) that associates search terms received from a user to search term identifiers, wherein the search terms are words used to find a destination and the search term identifiers are integer values; and
a spatial index (404) that includes multi-dimensional vectors, to which each document is mapped prior to storage in the spatial index, that represent destinations, wherein:
the multi-dimensional vectors include the search term identifiers; and
the multi-dimensional vectors have a format of one of:
(StreetID, Country, City, Street); or
(IntersectionID, State, City, Street1, Street2); or
(POND, Name, Country, Street, Category), and
wherein the system is configured to:
map the search term identifiers for each level of the destination to their own dimension;
use the search term identifiers mapped to their own dimensions to identify documents located in a boxed area of the spatial index as defined by a spatial query; and
provide a result set of document identifiers associated with the identified documents.

8. The system (400) of claim 7, wherein the relation table orders the search terms alphabetically.

9. The system (400) of claim 7, wherein the relation table (402) includes a dimension column that includes data that indicates a search term dimension.

10. The system (400) of claim 7, wherein the relation table (402) includes name rotations.

11. The system (400) of claim 7, wherein the relation table (402) includes exonyms.

12. The system (400) of claim 7, wherein the relation table (402) includes diacritic character replacements.

13. The system (400) of claim 7, wherein the spatial index (404) includes additional dimensions describing a spatial location of a destination represented by a vector.

14. The system (400) of claim 7, wherein the spatial index is one of an R-tree, X-tree, IQ-tree, and a Quadtree.

## Patentansprüche

1. Computerimplementiertes Verfahren (500) zum Durchführen einer Volltextsuche für Dokumente, wobei ein Dokument ein Eintrag in einer geographischen Datenbank (26) in einem Navigationssystem (10) ist, das einer Computerplattform (12) zugeordnet ist und wobei das Navigationssystem eine Kombination aus Hardware- und Softwarekomponenten ist und wobei die Dokumente Dokumentenkennungen zugeordnet sind, wobei das Verfahren Folgendes umfasst:
Empfangen (502) von Suchbegriffen von einem Benutzer, wobei die Suchbegriffe Wörter sind, die zum Finden eines Ziels verwendet werden;
Abfragen (504) einer Beziehungstabelle (402), welche die empfangenen Suchbegriffe den Suchbegriffskennungen zuordnet, um die den empfangenen Suchbegriffen zugeordneten Suchbegriffskennungen zu erhalten, wobei die Suchbegriffskennungen Ganzzahlwerte sind;
Zuordnen der Suchbegriffskennungen für jede Ebene des Ziels zu ihren eigenen Dimensionen;
Durchführen (506) einer räumlichen Abfrage eines räumlichen Index (404) unter Verwenden der Suchbegriffskennungen, die ihren eigenen Dimensionen zugeordnet sind, um Dokumente zu identifizieren, die sich in einem umrahmten Bereich des räumlichen Index (404) befinden, wie durch die räumliche Abfrage definiert, und wobei der räumliche Index mehrdimensionale Vektoren speichert, denen jedes Dokument vor dem Speichern im räumlichen Index zugeordnet ist, und wobei die mehrdimensionalen Vektoren die Suchbegriffskennungen enthalten und wobei die mehrdimensionalen Vektoren ein Format von folgenden Formaten aufweisen:
(Straßenkennung, Land, Stadt, Straße); oder
(Kreuzungskennung, Staat, Stadt, Straße1, Straße2) oder
(POIID [Provider of Information ID - Informationsanbieterkennung], Name, Land, Straße, Kategorie), Bereitstellen (508) einer Ergebnismenge von Dokumentenkennungen, die den identifizierten Dokumenten zugeordnet sind.

2. Verfahren (500) nach Anspruch 1, wobei die Beziehungstabelle die Suchbegriffe in alphabetischer Reihenfolge anordnet.

3. Verfahren (500) nach Anspruch 1, wobei der räumliche Index eines von einem R-Baum, X-Baum, IQ-Baum, und einem Quad-Baum ist.

4. Verfahren (500) nach Anspruch 1, wobei die Beziehungstabelle eine Dimensionsspalte enthält, die Daten enthält, die eine Suchbegriffsdimension angeben.

5. Verfahren (500) nach Anspruch 1, wobei die Beziehungstabelle Namensrotationen oder Exonyme oder diakritische Zeichenersetzungen enthält.

6. Verfahren (500) nach Anspruch 1, wobei der räumliche Index zusätzliche Dimensionen enthält, die eine räumliche Position eines Ziels beschreiben, das durch einen Vektor dargestellt wird.

7. Volltext-Suchsystem (400) für Dokumente, wobei ein Dokument ein Eintrag in einer geographischen Datenbank (26) in einem Navigationssystem (10) ist, das einer Computerplattform (12) zugeordnet ist und wobei das Navigationssystem eine Kombination aus Hardware- und Softwarekomponenten ist und wobei die Dokumente Dokumentenkennungen zugeordnet sind, wobei das System umfasst:
eine Beziehungstabelle (402), die von einem Benutzer empfangene Suchbegriffe mit Suchbegriffskennungen verknüpft, wobei die Suchbegriffe Wörter sind, die zum Finden eines Ziels verwendet werden, und die Suchbegriffskennungen ganzzahlige Werte sind; und
einen räumlichen Index (404), der mehrdimensionale Vektoren enthält, denen jedes Dokument vor dem Speichern im räumlichen Index zugeordnet ist, die Ziele darstellen, wobei
die mehrdimensionalen Vektoren die Suchbegriffskennungen enthalten; und
die mehrdimensionalen Vektoren ein Format von folgenden Formaten aufweisen:
(Straßenkennung, Land, Stadt, Straße); oder
(Kreuzungskennung, Staat, Stadt, Straße1, Straße2) oder
(POIID, Name, Land, Straße, Kategorie) und wobei das System für Folgendes konfiguriert ist:
Zuordnen der Suchbegriffskennungen zu jeder Ebene des Ziels zu ihrer eigenen Dimension;
Verwenden der Suchbegriffskennungen, die ihren eigenen Dimensionen zugeordnet sind, um Dokumente zu identifizieren, die sich in einem umrahmten Bereich des räumlichen Index befinden, wie durch eine räumliche Abfrage definiert; und
eine Ergebnismenge von Dokumentenkennungen bereitstellen, die den identifizierten Dokumenten zugeordnet sind.

8. System (400) nach Anspruch 7, wobei die Beziehungstabelle die Suchbegriffe in alphabetischer Reihenfolge anordnet.

9. System (400) nach Anspruch 7, wobei die Beziehungstabelle (402) eine Dimensionsspalte enthält, die Daten enthält, welche eine Suchbegriffsdimension angeben.

10. System (400) nach Anspruch 7, wobei die Beziehungstabelle (402) Namensrotationen enthält.

11. System (400) nach Anspruch 7, wobei die Beziehungstabelle (402) Exonyme enthält.

12. System (400) nach Anspruch 7, wobei die Beziehungstabelle (402) Ersetzungen diakritischer Zeichen enthält.

13. System (400) nach Anspruch 7, wobei der räumliche Index (404) zusätzliche Dimensionen enthält, die eine räumliche Position eines Ziels beschreiben, das durch einen Vektor dargestellt wird.

14. System (400) nach Anspruch 7, wobei der räumliche Index ein von einem R-Baum, X-Baum, IQ-Baum, und einem Quad-Baum ist.

## Revendications

1. Procédé mis en oeuvre par ordinateur (500) permettant d'effectuer une recherche de texte intégral pour les documents, dans lequel un document est une entrée d'une base de données géographique (26), dans un système de navigation (10) associé à une plate-forme informatique (12) et le système de navigation étant une combinaison de composants matériels et logiciels et les documents étant associés à des identifiants de documents, le procédé comprenant :
la réception (502) des termes de recherche d'un utilisateur, les termes de recherche étant des mots utilisés pour trouver une destination ;
l'interrogation (504) d'une table de relation (402) qui associe les termes de recherche reçus à des identifiants de terme de recherche afin d'obtenir les identifiants de terme de recherche associés aux termes de recherche reçus, les identifiants de terme de recherche étant des valeurs entières ;
le mappage des identifiants de termes de recherche pour chaque niveau de la destination à leurs propres dimensions ;
l'exécution (506) d'une interrogation spatiale d'un index spatial (404) en utilisant les identifiants de terme de recherche mappés à leurs propres dimensions pour identifier des documents situés dans une zone encadrée de l'index spatial (404), comme définie par l'interrogation spatiale, et l'index spatial stockant des vecteurs multidimensionnels auxquels est mappé chaque document avant d'être stocké dans l'index spatial, et les vecteurs multidimensionnels incluant les identifiants de terme de recherche et les vecteurs multidimensionnels ayant un format parmi l'un des formats suivants :
(ID de rue, Pays, Ville, Rue) ; ou
(ID d'intersection, État, Ville, Rue1, Rue2) ; ou
(ID de POI, Nom, Pays, Rue, Catégorie), la fourniture (508) d'un ensemble de résultats d'identifiants de documents associés aux documents identifiés.

2. Procédé (500) selon la revendication 1, dans lequel la table de relation classe les termes de recherche par ordre alphabétique.

3. Procédé (500) selon la revendication 1, dans lequel l'index spatial est l'un d'un R-tree, X-tree, IQ-tree et d'un Quadtree.

4. Procédé (500) selon la revendication 1, dans lequel la table de relation inclut une colonne de dimensions incluant des données qui indiquent une dimension de terme de recherche.

5. Procédé (500) selon la revendication 1, dans lequel la table de relation inclut des rotations de noms ou des exonymes, ou des remplacements de signes diacritiques.

6. Procédé (500) selon la revendication 1, dans lequel l'index spatial inclut des dimensions supplémentaires décrivant une localisation spatiale d'une destination représentée par un vecteur.

7. Système de recherche de texte intégral (400) destiné à des documents, dans lequel un document est une entrée d'une base de données géographique (26) dans un système de navigation (10) associé à une plate-forme informatique (12) et le système de navigation étant une combinaison de composants matériels et logiciels et les documents étant associés à des identifiants de document, le système comprenant :
une table de relation (402) qui associe des termes de recherche reçus d'un utilisateur à des identifiants de termes de recherche, les termes de recherche étant des mots utilisés pour trouver une destination et les identifiants de termes de recherche étant des valeurs entières ; et
un index spatial (404) qui inclut des vecteurs multidimensionnels, auxquels chaque document est mappé avant son stockage dans l'index spatial, et qui représentent des destinations :
les vecteurs multidimensionnels incluant les identifiants de terme de recherche ; et
les vecteurs multidimensionnels ayant un format parmi l'un des formats suivants :
(ID de rue, Pays, Ville, Rue) ; ou
(ID d'intersection, État, Ville, Rue1, Rue2) ; ou
(ID de POI, Nom, Pays, Rue, Catégorie) et le système étant configuré pour :
mapper les identifiants de terme de recherche pour chaque niveau de la destination à leur propre dimension ;
utiliser les identifiants de terme de recherche mappés à leurs propres dimensions pour identifier les documents situés dans une zone encadrée de l'index spatial, comme définie par une requête spatiale ; et
fournir un ensemble de résultats d'identifiants de documents associés aux documents identifiés.

8. Système (400) selon la revendication 7, dans lequel la table de relation classe les termes de recherche par ordre alphabétique.

9. Système (400) selon la revendication 7, dans lequel la table de relation (402) inclut une colonne de dimension incluant des données qui indiquent une dimension de terme de recherche.

10. Système (400) selon la revendication 7, dans lequel la table de relation (402) inclut des rotations de noms.

11. Système (400) selon la revendication 7, dans lequel la table de relation (402) inclut des exonymes.

12. Système (400) selon la revendication 7, dans lequel la table de relation (402) inclut des remplacements de signes diacritiques.

13. Système (400) selon la revendication 7, dans lequel l'index spatial (404) inclut des dimensions supplémentaires décrivant une localisation spatiale d'une destination représentée par un vecteur.

14. Système (400) selon la revendication 7, dans lequel l'index spatial est l'un d'un R-tree, X-tree, IQ-tree et d'un Quadtree.
